# EUROPEAN PATENT SPECIFICATION

(11) **EP 2 523 448 B1**
(45) Date of publication and mention of the grant of the patent: **03.10.2018**
(21) Application number: 10845542.9
(22) Date of filing: 09.08.2010
(51) Int. Cl.: H04N 1/32, H04L 29/06, H04N 1/333

(54) **METHOD FOR SWITCHING FACSIMILE, ACCESSING DEVICE AND FACSIMILE SYSTEM**
VERFAHREN FÜR FAKSIMILE-UMSCHALTUNG, GERÄTEZUGANG UND FAKSIMILE-SYSTEM
PROCÉDÉ DE COMMUTATION DE TÉLÉCOPIE, DISPOSITIF D'ACCÈS ET SYSTÈME DE TÉLÉCOPIE

(30) Priority: 10.02.2010 CN 201010111242
(43) Date of publication of application: 14.11.2012
(73) Proprietor: Huawei Technologies Co., Ltd., Longgang District Shenzhen, Guangdong 518129 (CN)
(72) Inventor: FENG, Bin, Shenzhen Guangdong 518129 (CN); WANG, Kai, Shenzhen Guangdong 518129 (CN); LI, Jinqian, Shenzhen Guangdong 518129 (CN); WANG, Jinping, Shenzhen Guangdong 518129 (CN)
(74) Representative: Körber, Martin Hans
(86) International application number: PCT/CN2010/075789
(87) International publication number: WO 2011/097872

(56) References cited:
- CN-A- 101 056 308
- CN-A- 101 056 308
- CN-A- 101 141 540
- CN-A- 101 155 095
- CN-A- 101 217 529
- JP-A- 8 167 985
- JP-A- 2004 328 166
- US-A1- 2009 201 940
- JEAN-FRANCOIS MULE JIEYING LI CLARENT CORP: "SIP Real-time Fax Call Flow Examples And Best Current Practices; draft-mule-sip-t38callflows-02.txt", 20011001, no. 2, 1 October 2001 (2001-10-01), XP015032827, ISSN: 0000-0004
- WALKER NORTEL NETWORKS D: "CALL ESTABLISHMENT PROCEDURES FOR T.38 H.248/MEGACO MEDIA GATEWAYS CAPABLE OF AUTONOMOUS TRANSITION BETWEEN VoIP AND T.38 FoIP; draft-walker-megaco-mg-t38-transition-00.t xt", 20021001, 1 October 2002 (2002-10-01), XP015005665, ISSN: 0000-0004

## Description

### FIELD OF THE INVENTION

The present invention relates to the field of communications technologies, and in particular, to a fax switching method, an access device, and a fax system.

### BACKGROUND OF THE INVENTION

A next generation network (Next Generation Network, NGN) is a next generation network that focuses soft switch, is capable of providing multimedia integrated services such as voice, video and data, adopts an open and standard architecture, and is capable of providing abundant services. A fax over IP (Fax over IP, FoIP) service is one of important services of the NGN, and supports application of conventional G3 and G4 fax terminals in an IP network. Negotiation of a fax capability between terminals may be described through a session description protocol (Session Description Protocol, SDP). Currently, there are two fax modes, namely, T38 fax and transparently-transmitted fax. In terms of use of a fax channel, a manner of multiplexing an audio channel and a fax channel is usually adopted, that is, audio and fax use the same real-time transport protocol (Real-time Transport Protocol, RTP) channel.

Currently, some terminals adopt an audio-transparent fax mode, and some terminals adopt a T38 fax mode, and therefore, in the prior art, when fax transmission is performed based on an audio and T38 fax application in which the RTP channel is multiplexed, if a second terminal adopts the T38 fax by default, a central office, when sending an audio-transparent fax switch request to a peer end, first receives a negotiation failure response returned by the peer end, and then the central office needs to reinitiate a second negotiation about the T38 fax, so that fax application and transmission can be continued.

It can be seen from the foregoing description that, cases of different fax switching modes exist in the NGN, that is, when fax capability modes supported by terminals are different, a case that the central office needs to negotiate with the peer end for multiple times occurs, which wastes a network transmission resource, and in addition, being affected by cases such as a network delay, two negotiations may also lead to a case that a negotiation of a fax machine fails and a fax rate is reduced, thereby seriously affecting a success ratio of fax.

CN101056308A discloses a method for achieving a signaling process of a high speed facsimile supported by medium ability, wherein H.248 protocol mutual information and control fax businesses are adapted between a soft switch and a gateway to be compatible with both T.38 and VBD fax modes at the same time, in which T.38 mode is selected preferably, then the VBD mode. The soft switch control fax sending terminal consults with both gateways of the receiving terminal about fax modes and fax medium channel information; after the fax is finished, according to working states of switch mechanism set by the soft switch, the switch is turned to a voice talking state or a call is released directly without turning the switch to the voice talking state.

### SUMMARY OF THE INVENTION

Embodiments of the present invention provide a fax switching method, an access device, and a fax system, so as to solve a problem that in the prior art fax mode switching requires multiple negotiations, which wastes a network transmission resource and causes that a fax rate is reduced.

To solve the foregoing technical problem, an embodiment of the present invention provides a fax switching method according to independent claim 1.

An embodiment of the present invention provides an access device according to independent claim 5.

An embodiment of the present invention provides a fax system according to claim 7, where the fax system includes: a first terminal, a second terminal and an access node with the features of the access device defined above, where the access node is connected to the first terminal and the second terminal, and the first terminal is configured to send a first initial call request message to the access node;
and
the second terminal is configured to send an initial call success response message to the access node, where the initial call success response message carries information of the fax capability supported by the second terminal.

The embodiments of the present invention may have the following advantages:
In the embodiments of the present invention, according to a result of an initial capability negotiation of the first terminal with the second terminal, when fax switching is initiated, an MSAN device may know whether T38 fax switching or audio transparent fax switching is initiated, and in this way, a result of failures of multiple negotiations in the prior art is avoided, thereby increasing a speed of a negotiation of the second terminal with the first terminal.

### BRIEF DESCRIPTION OF THE DRAWINGS

To describe the technical solutions in the embodiments of the present invention or in the prior art more clearly, the accompanying drawings required for describing the embodiments or the prior art are introduced briefly in the following. Apparently, the accompanying drawings in the following description are merely some of the embodiments of the present invention, and persons of ordinary skill in the art may also obtain other drawings according to these accompanying drawings without creative efforts.
FIG. 1 is a flow chart of a fax switching method according to a first embodiment of the present invention;
FIG. 2 is a flow chart of a fax switching method according to a second embodiment of the present invention;
FIG. 3 is a schematic structural diagram of an access device of according to an embodiment of the present invention; and
FIG. 4 is a schematic structural diagram of a fax system according to an embodiment of the present invention.

### DETAILED DESCRIPTION OF THE EMBODIMENTS

The technical solutions in the embodiments of the present invention are clearly and fully described in the following with reference to the accompanying drawings in the embodiments of the present invention. Apparently, the embodiments to be described are only a part rather than all of the embodiments of the present invention. Based on the embodiments of the present invention, all other embodiments obtained by persons of ordinary skill in the art without creative efforts shall fall within the protection scope of the present invention.

In the embodiments of the present invention, a first terminal and a second terminal are connected through an access node, where the access node herein may be an MSAN (Multi-Service Access Network, multi-service access network) device, or a DSLAM (Digital subscriber line access multiplexer, digital subscriber line access multiplexer), and so on. In the following embodiments, the access node is exemplified by using an MSAN device.

The MSAN device stores a fax capability supported by the first terminal, but does not know a fax capability supported by the second terminal, and no problem exists when the first terminal and the second terminal use the same fax mode for fax, because the MSAN device may adopt an unified fax mode to switch a media stream channel, and the first terminal may send, according to the unified fax mode, fax information to the second terminal through the media stream channel. However, when different fax capabilities exist between the first terminal and the second terminal, the MSAN device needs to negotiate for multiple times in order to unify a fax mode of the first terminal and a fax mode of the second terminal, and in this way, fax switching is relatively slow, and even a fax failure is caused.

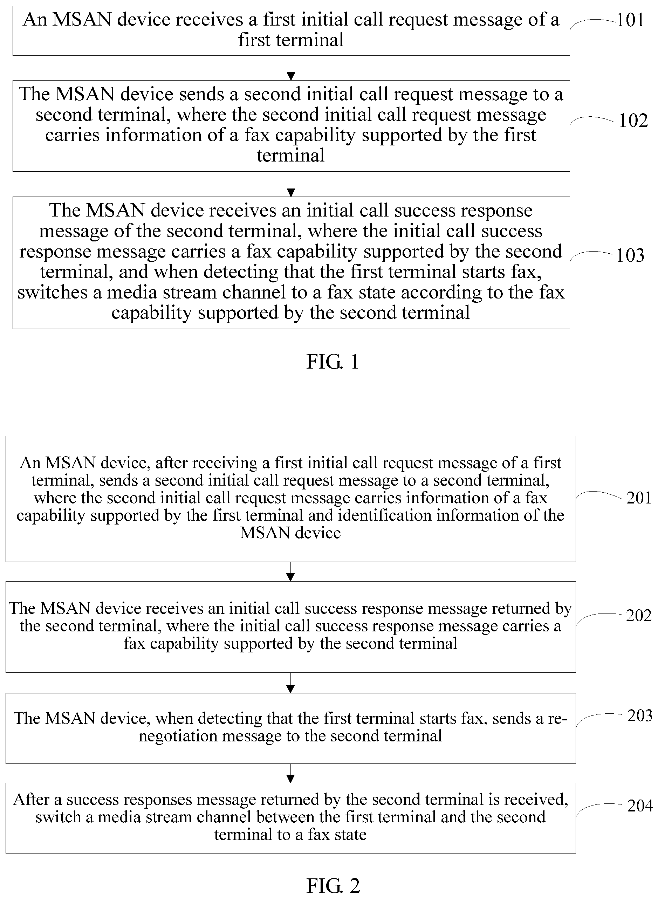

To solve the foregoing problem, an embodiment of the present invention provides a fax switching method. Referring to FIG. 1, the method may include the following steps:
Step 101: An MSAN device receives a first initial call request message of a first terminal.

In an first initial call request message (INVITE) initiated by the first terminal to a second terminal, information of a fax capability supported by the first terminal, such as an audio-transparent transmission capability and/or a T38 fax capability, may be carried; and the fax capability supported by the first terminal may also be stored in the MSAN device, and in this way, a first initial call request message sent by the first terminal may not carry the fax capability supported by the first terminal.

Step 102: The MSAN device sends a second initial call request message to the second terminal, where the second initial call request message carries the information of the fax capability supported by the first terminal.

The MSAN device, after receiving the first initial call request message of the first terminal, sends a second initial call request message to the second terminal, where the fax capability that is supported by the first terminal and described by using an SDP is carried in the second initial call request message.

The second initial call request message may further carry identification information of the MSAN device, so as to provide the identification information for the second terminal to use for establishing a media stream channel. The identification information of the MSAN device herein may be address information of the MSAN device, such as an IP address of the MSAN device, or a media access control (Media Access Control, MAC) address of the MSAN device, and so on. The identification information of the MSAN device may further include identification information of a port that is connected to the first terminal and on the MSAN device, and the port identification information herein may be one or multiple kinds of the following: a port number, a frame of the port on the MSAN device, and a slot position of the port on the MSAN device.

The second terminal, after receiving the second initial call request message, selects at least one fax capability that can be supported by the second terminal from the fax capability supported by the first terminal as a fax capability supported by the second terminal and sends the fax capability supported by the second terminal to the MSAN device. The fax capability supported by the second terminal may be carried in an initial call success response (200 OK) message, where the fax capability supported by the second terminal may be described by using an SDP protocol.

The second terminal establishes a media stream channel according to the identification information of the MSAN device. After the media stream channel is established, a state of the media stream channel may be set as an audio communication state, so that the first terminal and the second terminal may send an audio media stream to each other. A process of establishing a media stream channel according to the identification information of the MSAN device may be: obtaining address information of the MSAN device from the second initial call request message, and establishing a media stream channel according to the obtained address information. The process of establishing the media stream channel according to the address information is known to all persons of ordinary skill in the art, which is not described herein again.

Step 103: The MSAN device receives an initial call success response message of the second terminal, where the initial call success response message carries the fax capability supported by the second terminal, and when detecting that the first terminal starts fax, switches the media stream channel to a fax state according to the fax capability supported by the second terminal.

When it is detected that the first terminal starts fax, the media stream channel is switched to the fax state according to the fax capability supported by the second terminal. For example, when the second terminal supports a T38 fax capability, a current media stream channel is switched to a T38 fax state; and when the second terminal supports only an audio-transparent transmission capability, the current media stream channel is switched to a transparent fax state. How to switch the state of the media stream channel is known to all persons of ordinary skill in the art, which is not described herein again.

After the current media stream channel is switched to the fax state, the first terminal may send fax information to the second terminal through a current media stream.

In this embodiment, according to a result of a negotiation of the first terminal with the second terminal, when fax switching is initiated, the MSAN device may know whether T38 fax switching or audio-transparent fax switching is initiated, and in this way, a result of failures of multiple negotiations is avoided, thereby increasing a speed of a negotiation of the second terminal with the first terminal. With the method in this embodiment of the present invention, a problem that in the case of channel multiplexing, the audio-transparent transmission capability and the T38 fax capability cannot be negotiated during an initial call may be solved, and a success ratio of fax switching in an NGN network may also be improved in a multi-switching mode application scenario.

An embodiment of the present invention provides a fax switching method. Referring to FIG. 2, the provided fax switching method may include the following steps:
Step 201: An MSAN device, after receiving a first initial call request message of a first terminal, sends a second initial call request message to a second terminal, where the second initial call request message carries information of a fax capability supported by the first terminal and identification information of the MSAN device.

The information of the fax capability supported by the first terminal may be described by using an SDP.

In this embodiment, the MSAN device extends application identification information of a multiplexed media channel in the SDP, where the application identification information is used to identify the fax capability of the first terminal.

In this embodiment, the MSAN device needs to extend the SDP, and specifically, the MSAN device may implement extension by extending an MFID label in the SDP, where the MFID label represents the application identification information of the multiplexed media channel. In an actual application, one example based on the SDP may be shown as follows:
v=0
o=Laura 289083124 289083124 IN IP4 one.example.com
t=0 0
c=IN IP4 192.0.2.1
**a**= **group:MFID 1 2**
**m**=**audio 30000 RTP**/**AVP 0 8**
**a**=**mid: 1**
**a**=**CurrMedia**
**m**=**image 30000 udptl t38**
**a**=**mid:2**

Here, "a= group:MFID 1 2" represents that applications of the multiplexed media channel have two kinds of media capability applications 1 and 2, "Mid=1" may represent that the first terminal supports a fax manner of an audio-transparent transmission capability, and "Mid=2" may represent that the first terminal supports a T38 fax capability. The MFID is an application identification of the multiplexed media channel. In the SDP, **"m=audio 30000 RTP/AVP 0 8"** is a line m with the audio-transparent transmission capability, **"m=image 30000 udptl t38"** is a line m with the T38 fax capability, and "a=CurrMedia" is used to indicate that a media stream channel needs to be established currently in an audio manner; and other media type parameters in the SDP are the same as those in the prior art, which are not described herein again.

Step 202: The MSAN device receives an initial call success response message returned by the second terminal, where the initial call success response message carries a fax capability supported by the second terminal.

In this embodiment, if the second terminal also supports the T38 fax capability and the audio-transparent transmission capability at the same time, the second terminal returns an initial call success response (200 OK) message to the MSAN device, where the initial call success response (200 OK) message carries the T38 fax capability and the audio-transparent transmission capability, and the fax capability supported by the second terminal may be carried in a 200 OK message in a form that is based on the SDP, and the SDP also needs to be extended, which may be shown as follows:
v=0
o=Join 5678083124 65533124 IN IP4 one.example.com
t=0 0
c=IN IP4 192.0.2.2
**a= group:MFID 1 2**
**m=audio 20000 RTP/AVP 0 8**
**a=mid:1**
**a=CurrMedia**
**m=image 20000 udptl t38**
**a=mid:2**

It should be noted that, an extended SDP needs to satisfy a regulation of RFC3388 and RFC4566.

After receiving the 200 OK message returned by the second terminal, the MSAN device may know, from the 200 OK message, that the second terminal supports the audio-transparent transmission capability and the T38 fax capability at the same time.

If the second terminal does not support a fax mode of the T38 fax capability, a line m of the T38 fax capability does not need to be included in the SDP, which is as follows:
**v=0**
**o=Join 5678083124 65533124 IN IP4 one.example.com**
**t=0 0**
**c=IN IP4 192.0.2.2**
**a= group:MFID 1**
**m=audio 20000 RTP/AVP 0 8**
**a=mid:1**
**a=CurrMedia**

The second terminal establishes a media stream channel according to the identification information of the MSAN device, and a process of establishing a media stream channel is known to all persons of ordinary skill in the art.

Step 203: The MSAN device, when detecting that the first terminal starts fax, sends a re-negotiation message to the second terminal.

When both the first terminal and the second terminal support two kinds of fax capabilities at the same time, the MSAN device may choose any one of fax capabilities to initiate a re-negotiation process to the second terminal, and may also preset a priority order according to a network condition and select a fax capability with a higher priority. In this embodiment, when both the first terminal and the second terminal support two kinds of fax capabilities at the same time, the T38 fax capability is used preferentially, and when it is detected that the first terminal starts fax, the MSAN sends a first re-negotiation message (Reinvite) to the second terminal, where the first re-negotiation message (Reinvite) carries an identification of the T38 fax capability. The identification of the T38 fax capability may be described by using an SDP, for example:
**v=0**
**o=Laura 289083124 289083124 IN IP4 one.example.com**
**t=0 0**
**c=IN IP4 192.0.2.1**
**m=image 30000 udptl t38**
**a=mid:2**
**a=CurrMedia**

Here, a line m **m=image 30000 udptl t38** identifies the T38 fax capability.

The second terminal, after receiving the first re-negotiation message, sends a first success response message to the MSAN device, where the first success response message carries the identification of the T38 fax capability. The first success response message may be a 200 OK message that carries the T38 fax capability.

When the second terminal does not support the T38 fax capability, the MSAN device sends a second re-negotiation message to the second terminal, where the second re-negotiation message carries an identification of the audio-transparent transmission capability. The identification of the audio-transparent transmission capability may also be described by using an SDP, for example:
**v=0**
**o=Laura 289083124 289083124 IN IP4 one.example.com**
**t=0 0**
**c=IN IP4 192.0.2.1**
**m=audio 20000 RTP/AVP 0 8**
**a=mid:1**
**a=CurrMedia**

Here, a line m identified by **m=audio 20000 RTP/AVP 0 8** identifies the audio-transparent transmission capability.

The second terminal, after receiving the second re-negotiation message, sends a second success response message to the MSAN device, where the second success response message carries the identification of the audio-transparent transmission capability.

Step 204: After a success response message returned by the second terminal is received, switch a media stream channel between the first terminal and the second terminal to a fax state.

The MSAN device, after receiving the first success response message returned by the second terminal, switches the media stream channel between the first terminal and the second terminal to a T38 fax state.

The MSAN device, after receiving the second success response message returned by the second terminal, switches the media stream channel between the first terminal and the second terminal to an audio-transparent transmission state.

The media stream channel may be switched to the fax state by modifying a parameter of the media stream channel, and specifically, how to perform switching is known to all persons of ordinary skill in the art.

In this embodiment, the first terminal and the second terminal extend an SDP, and an identification of a fax capability of the first terminal and an identification of a fax capability of the second terminal are added in a message format of the SPD, so that a fax capability negotiation between the first terminal and the second terminal may be completed before switching to the fax state, thereby reducing the number of negotiation times during fax switching, and improving performance of a network.

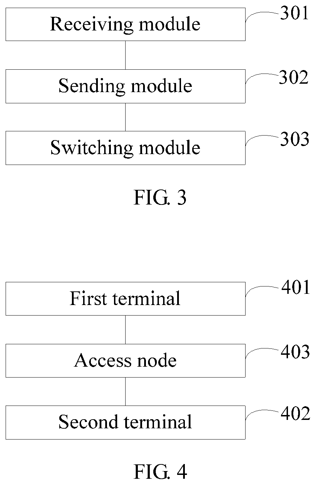

An embodiment of the present invention provides an access device. Referring to FIG. 3, the device may specifically include:
A receiving module 301 is configured to receive a first initial call request message from a first terminal, and receive an initial call success response message of a second terminal, where the initial call success response message carries a fax capability supported by the second terminal.

The first initial call request message of the first terminal may carry a fax capability supported by the first terminal.

The initial call success response message herein may be a 200 OK message, and the fax capability supported by the second terminal is carried in the 200 OK message in a form that is based on an SDP. The fax capability supported by the second terminal is one or multiple kinds of fax capabilities, where the one or multiple kinds of fax capabilities are selected, according to a capability of the second terminal, by the second terminal from a fax capability supported by the first terminal.

A sending module 302 is configured to send a second initial call request message to the second terminal, where the second initial call request message carries information of the fax capability supported by the first terminal, and indicates that an active state of a media stream channel that needs to be established is an audio communication state.

The information of the fax capability supported by the first terminal may be described by using an SDP, the second initial call request message may further carry address information of the access device, the address information may be an IP address of the access device and port identification information of a port that is connected to the first terminal and on the access device, and the port identification information herein may be one or multiple kinds of the following: a port number, a frame of a port on an MSAN device, and a slot position of the port on the MSAN device.

A switching module 303 is configured to, after the media stream channel is established, detect that the first terminal starts fax, and switch the media stream channel from the audio communication state to a fax state according to the fax capability supported by the second terminal

The sending module 302 is further configured to, when the switching module 303 detects that the first terminal starts fax, send a re-negotiation message to the second terminal, where the re-negotiation message carries a T38 fax capability or an audio-transparent transmission capability. The receiving module 301 is further configured to receive a success response message returned by the second terminal.

The access device provided in this embodiment may be an MSAN device, and may also be one functional module integrated in the MSAN device or a device connected to the MSAN device.

The access device provided in this embodiment may also be a DSLAM device, and may also be one functional module integrated in the DSLAM device or a device connected to the DSLAM device.

In this embodiment, according to a result of a negotiation of the first terminal with the second terminal, when fax switching is initiated, the access device may know whether T38 fax switching or audio-transparent fax switching is initiated, and in this way, a result of multiple negotiations or even a failure is avoided, thereby increasing a speed of a negotiation of the second terminal with the first terminal. By using the device in this embodiment of the present invention, a problem that in the case of channel multiplexing, an audio-transparent transmission capability and a T38 fax capability cannot be negotiated during an initial call may be solved, and a success ratio of fax switching in an NGN network may also be improved in a multi-switching mode application scenario.

Meanwhile, an embodiment of the present invention further provides a fax switching system. The system may specifically include: a first terminal 401, a second terminal 402, and an access node 403, where the access node is connected to the first terminal and the second terminal. The access node 403 may be an MSAN device, or a DSLAM, and so on.

The first terminal 401 is configured to send a first initial call request message to the access node 403.

The first initial call request message sent by the first terminal 401 may carry information of a fax capability supported by the first terminal 401.

The access node 403 is configured to response to the first initial call request message, and send a second initial call request message to the second terminal 402, where the second initial call request message carries the information of the fax capability supported by the first terminal, and indicates that an active state of a media stream channel that needs to be established is an audio communication state; receive an initial call success response message returned by the second terminal 402, and determine, according to the initial call success response message, a fax capability supported by the second terminal 402; and after the media stream channel is established, detect that the first terminal starts fax, and switch the media stream channel from the audio communication state to a fax state according to the fax capability supported by the second terminal. The second terminal 402 is configured to send an initial call success response message to the access node, where the initial call success response message carries information of the fax capability supported by the second terminal 402.

Preferably, the access node is further configured to send a re-negotiation message to the second terminal according to a recorded fax capability supported by the second terminal, where the re-negotiation message carries information that identifies the fax capability supported by the second terminal.

Preferably, the second terminal is further configured to receive fax information from the first terminal.

In the system in this embodiment, according to a result of a negotiation of the first terminal with the second terminal, when fax switching is initiated, an MSAN device may know whether T38 fax switching or audio-transparent fax switching is initiated, and in this way, a result of failures of multiple negotiations is avoided, thereby increasing a speed of a negotiation of the second terminal with the first terminal. By using the fax system in this embodiment of the present invention, a problem that in the case of channel multiplexing, an audio-transparent transmission capability and a T38 fax capability cannot be negotiated during an initial call may be solved, and a success ratio of fax switching in an NGN network may also be improved in a multi-switching mode application scenario.

It should also be noted that, in this specification, terms "comprise", "include" or any other variation of them, is intended to cover a non-exclusive inclusion, so that a process, method, article, or device that includes a series of elements not only includes those elements but also includes other elements that are not expressly listed, or further includes elements that are inherent to such process, method, article, or device. An element modified by "include a..." does not preclude, without more constraints, existence of additional identical elements in the process, method, article, or device that includes the foregoing elements.

Persons of ordinary skill in the art may understand that all or a part of the steps in the methods according to the foregoing embodiments may be implemented by a program instructing relevant hardware. The program may be stored in a computer readable storage medium. The storage medium may include a ROM, a RAM, a magnetic disk, or an optical disk, and so on.

The fax switching method, device and system provided in the embodiments of the present invention are described in detail in the foregoing. The principle and implementation manner of the present invention are described in this specification by using specific examples. The foregoing description about the embodiments is merely used for helping understand the method and ideas of the embodiments of the present invention. Therefore, content of this specification shall not be construed as a limitation to the present invention.

The scope of the invention is limited by the independent claims.

## Claims

1. A fax switching method, comprising:
receiving (101), by an access node, a first initial call request message from a first terminal; in response to receiving the first initial call message, sending (102), by the access node, a second initial call request message to a second terminal, wherein the second initial call request message carries information of a fax capability supported by the first terminal, and indicates that an active state of a media stream channel between the first terminal and the second terminal that needs to be established is an audio communication state;
receiving, by the access node, an initial call success response message returned by the second terminal, wherein the initial call success response message carries a fax capability supported by the second terminal; and determining, by the access node, according to the initial call success response message, a fax capability supported by the second terminal; and
after the media stream channel is established in the audio communication state, detecting, by the access node, that the first terminal starts to fax, and switching the media stream channel from the audio communication state to a fax state according to the fax capability supported by the second terminal.

2. The method according to claim 1, wherein the access node records, according to the information that identifies the fax capability supported by the second terminal and is carried in the initial call success response message, the fax capability supported by the second terminal; and
the access node, after detecting that the first terminal starts to fax, sends, according to the recorded fax capability supported by the second terminal, a re-negotiation message to the second terminal, wherein the re-negotiation message carries the information that identifies the fax capability supported by the second terminal.

3. The method according to any one of claims 1 to 2, wherein the fax capability supported by the first terminal comprises an audio-transparent transmission capability and a T38 fax capability.

4. The method according to any one of claims 1 to 2, wherein the second initial call request message carries information of an audio capability that is described by using a session description protocol SDP and information of the fax capability supported by the first terminal; and
the initial call success response message carries information of the fax capability that is supported by the second terminal and described by using the session description protocol SDP.

5. An access device, comprising:
a receiving module (301), configured to receive a first initial call request message of a first terminal, receive an initial call success response message returned by a second terminal, and determine a fax capability supported by the second terminal according to the initial call success response message, wherein the initial call success response message carries information of a fax capability supported by the second terminal;
a sending module (302), configured to send a second initial call request message to the second terminal, in response to receiving the first initial call request message, wherein the second initial call request message carries information of a fax capability supported by the first terminal, and indicates that an active state of a media stream channel between the first terminal and the second terminal that needs to be established is an audio communication state; and
a switching module (303), configured to, after the media stream channel is established in the audio communication state, detect that the first terminal starts to fax, and switch the media stream channel from the audio communication state to a fax state according to the fax capability supported by the second terminal.

6. The device according to claim 5, wherein,
the sending module is further configured to send, according to a recorded fax capability supported by the second terminal, a re-negotiation message to the second terminal, wherein the re-negotiation message carries information that identifies the fax capability supported by the second terminal.

7. A fax system, **characterized by** comprising a first terminal, a second terminal, and an access node of claim 5, wherein the access node is connected to the first terminal and the second terminal, wherein:
the first terminal is configured to send a first initial call request message to the access node;
and
the second terminal is configured to send an initial call success response message to the access node, wherein the initial call success response message carries information of the fax capability supported by the second terminal.

8. The system according to claim 7, wherein the access node is further configured to send, according to a recorded fax capability supported by the second terminal, a re-negotiation message to the second terminal, wherein the re-negotiation message carries information that identifies the fax capability supported by the second terminal.

9. The system according to claim 7 or 8, wherein the second terminal is further configured to receive fax information from the first terminal.

## Patentansprüche

1. Fax-Umschaltverfahren, umfassend:
Empfangen (101), durch einen Zugriffsknoten, einer ersten Anfangsanruf-Anforderungsnachricht von einem ersten Endgerät; in Reaktion auf das Empfangen der ersten Anfangsanrufhachricht,
Senden (102), durch den Zugriffsknoten, einer zweiten Anfangsanruf-Anforderungsnachricht an ein zweites Endgerät, wobei die zweite Anfangsanruf-Anforderungsnachricht Informationen einer Faxfähigkeit trägt, die von dem ersten Endgerät unterstützt wird, und anzeigt, dass ein aktiver Zustand eines Medienstromkanals zwischen dem ersten Endgerät und dem zweiten Endgerät, der hergestellt werden muss, ein Audiokommunikationszustand ist;
Empfangen, durch den Zugriffsknoten, einer Anfangsanruf-Erfolgsantwortnachricht, die von dem zweiten Endgerät zurückgegeben wurde, wobei die Anfangsanruf-Erfolgsantwortnachricht eine Faxfähigkeit trägt, die von dem zweiten Endgerät unterstützt wird; und
Ermitteln, durch den Zugriffsknoten, gemäß der Anfangsanruf-Erfolgsantwortnachricht, einer Faxfähigkeit, die von dem zweiten Endgerät unterstützt wird; und
nachdem der Medienstromkanal in dem Audiokommunikationszustand hergestellt ist, Erkennen, durch den Zugriffsknoten, dass das erste Endgerät zu faxen beginnt, und Umschalten des Medienstromkanals aus dem Audiokommunikationszustand in einen Faxzustand gemäß der Faxfähigkeit, die von dem zweiten Endgerät unterstützt wird.

2. Verfahren nach Anspruch 1, wobei der Zugriffsknoten gemäß den Informationen, die die Faxfähigkeit identifizieren, die von dem zweiten Endgerät unterstützt wird, und in der Anfangsanruf-Erfolgsantwortnachricht getragen werden, die Faxfähigkeit aufzeichnet, die von dem zweiten Endgerät unterstützt wird; und
der Zugriffsknoten nach dem Erkennen, dass das erste Endgerät zu faxen beginnt, gemäß der aufgezeichneten Faxfähigkeit, die von dem zweiten Endgerät unterstützt wird, eine Neuaushandlungsnachricht an das zweite Endgerät sendet, wobei die Neuaushandlungsnachricht die Informationen trägt, die die Faxfähigkeit identifizieren, die von dem zweiten Endgerät unterstützt wird.

3. Verfahren nach einem der Ansprüche 1 bis 2, wobei die Faxfähigkeit, die von dem ersten Endgerät unterstützt wird, eine audiotransparente Übertragungsfähigkeit und eine T38-Faxfähigkeit umfasst.

4. Verfahren nach einem der Ansprüche 1 bis 2, wobei die zweite Anfangsanruf-Anforderungsnachricht Informationen einer Audiofähigkeit trägt, die mithilfe eines Sitzungsbeschreibungsprotokolls SDP und Informationen der Faxfähigkeit, die von dem ersten Endgerät unterstützt wird, beschrieben wird; und
die Anfangsanruf-Erfolgsantwortnachricht Informationen der Faxfähigkeit trägt, die von dem zweiten Endgerät unterstützt wird und mithilfe des Sitzungsbeschreibungsprotokolls SDP beschrieben wird.

5. Zugriffsvorrichtung, umfassend:
ein Empfangsmodul (301), das konfiguriert ist, eine erste Anfangsanruf-Anforderungsnachricht eines ersten Endgeräts zu empfangen, eine Anfangsanruf-Erfolgsantwortnachricht zu empfangen, die von einem zweiten Endgerät zurückgegeben wurde, und eine Faxfähigkeit zu ermitteln, die von dem zweiten Endgerät gemäß der Anfangsanruf-Erfolgsantwortnachricht unterstützt wird, wobei die Anfangsanruf-Erfolgsantwortnachricht Informationen einer Faxfähigkeit trägt, die von dem zweiten Endgerät unterstützt wird;
ein Sendemodul (302), das konfiguriert ist, in Reaktion auf das Empfangen der ersten Anfangsanruf-Anforderungsnachricht eine zweite Anfangsanruf-Anforderungsnachricht an das zweite Endgerät zu senden,
wobei die zweite Anfangsanruf-Anforderungsnachricht Informationen einer Faxfähigkeit trägt, die von dem ersten Endgerät unterstützt wird, und anzeigt, dass ein aktiver Zustand eines Medienstromkanals zwischen dem ersten Endgerät und dem zweiten Endgerät, der hergestellt werden muss, ein Audiokommunikationszustand ist; und
ein Umschaltmodul (303), das konfiguriert ist, nachdem der Medienstromkanal in dem Audiokommunikationszustand hergestellt ist, zu erkennen, dass das erste Endgerät zu faxen beginnt, und den Medienstromkanal aus dem Audiokommunikationszustand gemäß der Faxfähigkeit, die von dem zweiten Endgerät unterstützt wird, in einen Faxzustand umzuschalten.

6. Vorrichtung nach Anspruch 5, wobei das Sendemodul ferner konfiguriert ist, gemäß einer aufgezeichneten Faxfähigkeit, die von dem zweiten Endgerät unterstützt wird, eine Neuaushandlungsnachricht an das zweite Endgerät zu senden, wobei die Neuaushandlungsnachricht Informationen trägt, die die Faxfähigkeit identifizieren, die von dem zweiten Endgerät unterstützt wird.

7. Faxsystem, **gekennzeichnet durch** das Umfassen eines ersten Endgeräts, eines zweiten Endgeräts und eines Zugriffsknotens nach Anspruch 5, wobei der Zugriffsknoten mit dem ersten Endgerät und dem zweiten Endgerät verbunden ist, wobei:
das erste Endgerät konfiguriert ist, eine erste Anfangsanruf-Anforderungsnachricht an den Zugriffsknoten zu senden; und
das zweite Endgerät konfiguriert ist, eine Anfangsanruf-Erfolgsantwortnachricht an den Zugriffsknoten zu senden, wobei die Anfangsanruf-Erfolgsantwortnachricht Informationen der Faxfähigkeit trägt, die von dem zweiten Endgerät unterstützt wird.

8. System nach Anspruch 7, wobei der Zugriffsknoten ferner konfiguriert ist, gemäß einer aufgezeichneten Faxfähigkeit, die von dem zweiten Endgerät unterstützt wird, eine Neuaushandlungsnachricht an das zweite Endgerät zu senden, wobei die Neuaushandlungsnachricht Informationen trägt, die die Faxfähigkeit identifizieren, die von dem zweiten Endgerät unterstützt wird.

9. System nach Anspruch 7 oder 8, wobei das zweite Endgerät ferner konfiguriert ist, Faxinformationen von dem ersten Endgerät zu empfangen.

## Revendications

1. Procédé de commutation de télécopie, consistant à :
recevoir (101), par un noeud d'accès, un premier message de demande d'appel initial en provenance d'un premier terminal ;
en réponse à la réception d'un premier message de demande d'appel initial, envoyer (102), par le noeud d'accès, un second message de demande d'appel initial à un second terminal, le second message de demande d'appel initial transportant une information d'une capacité de télécopie prise en charge par le premier terminal, et indiquant qu'un état actif d'un canal de flux multimédia qui doit être établi entre le premier terminal et le second terminal est un état de communication audio ;
recevoir, par le noeud d'accès, un message de réponse de réussite d'appel initial renvoyé par le second terminal, le message de réponse de réussite d'appel initial transportant une capacité de télécopie prise en charge par le second terminal, et déterminer, par le noeud d'accès selon le message de réponse de réussite d'appel initial, une capacité de télécopie prise en charge par le second terminal ; et
une fois le canal de flux multimédia établi dans l'état de communication audio, détecter, par le noeud d'accès, que le premier terminal commence à télécopier, et commuter le canal de flux multimédia de l'état de communication audio à un état de télécopie selon la capacité de télécopie prise en charge par le second terminal.

2. Procédé selon la revendication 1, dans lequel le noeud d'accès enregistre, selon l'information qui identifie la capacité de télécopie prise en charge par le second terminal et qui est transportée dans le message de réponse de réussite d'appel initial, la capacité de télécopie prise en charge par le second terminal ; et
le noeud d'accès, après la détection du fait que le premier terminal commence à télécopier, envoie, selon la capacité de télécopie enregistrée prise en charge par le second terminal, un message de renégociation au second terminal, le message de renégociation transportant l'information qui identifie la capacité de télécopie prise en charge par le second terminal.

3. Procédé selon l'une quelconque des revendications 1 et 2, dans lequel la capacité de télécopie prise en charge par le premier terminal comprend une capacité de transmission transparente aux données audio et une capacité de télécopie T38.

4. Procédé selon l'une quelconque des revendications 1 et 2, dans lequel le second message de demande d'appel initial transporte une information d'une capacité audio qui est décrite au moyen d'un protocole de description de session (SDP), et une information de la capacité de télécopie prise en charge par le premier terminal ; et
le message de réponse de réussite d'appel initial transporte une information de la capacité de télécopie qui est prise en charge par le second terminal et qui est décrite au moyen du protocole de description de session (SDP).

5. Dispositif d'accès, comprenant :
un module de réception (301), conçu pour recevoir un premier message de demande d'appel initial d'un premier terminal, recevoir un message de réponse de réussite d'appel initial renvoyé par un second terminal, et déterminer une capacité de télécopie prise en charge par le second terminal selon le message de réponse de réussite d'appel initial, le message de réponse de réussite d'appel initial transportant une information d'une capacité de télécopie prise en charge par le second terminal ;
un module d'envoi (302), conçu pour envoyer un second message de demande d'appel initial au second terminal, en réponse à la réception du premier message de demande d'appel initial, le second message de demande d'appel initial transportant une information d'une capacité de télécopie prise en charge par le premier terminal, et indiquant qu'un état actif d'un canal de flux multimédia qui doit être établi entre le premier terminal et le second terminal est un état de communication audio ; et
un module de commutation (303), conçu pour, une fois le canal de flux multimédia établi dans l'état de communication audio, détecter que le premier terminal commence à télécopier, et commuter le canal de flux multimédia de l'état de communication audio à un état de télécopie selon la capacité de télécopie prise en charge par le second terminal.

6. Dispositif selon la revendication 5, dans lequel le module d'envoi est en outre conçu pour envoyer, selon une capacité de télécopie enregistrée prise en charge par le second terminal, un message de renégociation au second terminal, le message de renégociation transportant une information qui identifie la capacité de télécopie prise en charge par le second terminal.

7. Système de télécopie, **caractérisé en ce qu'**il comprend un premier terminal, un second terminal et un noeud d'accès selon la revendication 5, le noeud d'accès étant connecté au premier terminal et au second terminal :
le premier terminal étant conçu pour envoyer un premier message de demande d'appel initial au noeud d'accès ; et
le second terminal étant conçu pour envoyer un message de réponse de réussite d'appel initial au noeud d'accès, le message de réponse de réussite d'appel initial transportant une information de la capacité de télécopie prise en charge par le second terminal.

8. Système selon la revendication 7, dans lequel le noeud d'accès est en outre conçu pour envoyer, selon une capacité de télécopie enregistrée prise en charge par le second terminal, un message de renégociation au second terminal, le message de renégociation transportant une information qui identifie la capacité de télécopie prise en charge par le second terminal.

9. Système selon la revendication 7 ou 8, dans lequel le second terminal est en outre conçu pour recevoir une information de télécopie en provenance du premier terminal.
